# EUROPEAN PATENT APPLICATION

(11) **EP 1 848 119 A1**
(43) Date of publication of application: **24.10.2007**
(21) Application number: 07106257.4
(22) Date of filing: 16.04.2007
(51) Int. Cl.: H04B 7/08

(54) **Diversity receiver**

(30) Priority: 19.04.2006 JP 2006115167
(71) Applicant: Sony Corporation, Minato-ku Tokyo 108-0075 (JP)
(72) Inventor: Komiyama, Akinori, Tokyo 108-0075 (JP)
(74) Representative: Melzer, Wolfgang

(57) **Abstract**

A diversity receiver includes first and second reception circuits using a superheterodyne principle. At stationary reception, reception of the audio signals and the data employing a phase diversity reception system is performed such that the signals received by the first reception antenna are supplied to the first reception circuit, the signals received by the second reception antenna are supplied to the second reception circuit, and phases of first and second intermediate-frequency signals are controlled and the first and second intermediate-frequency signals are added. At reception-frequency search, reception of the audio signals employing an antenna-switching diversity reception system is performed such that the signals received by at least one of the first and second antennas are supplied to the first reception circuit and reception of the data and the reception-frequency search are performed, and the signals received by the first and second antennas are supplied to the second reception circuit.

## Description

### CROSS REFERENCES TO RELATED APPLICATIONS

The present invention contains subject matter related to Japanese Patent Application JP 2006-115167 filed in the Japanese Patent Office on April 19, 2006, the entire contents of which are incorporated herein by reference.

### BACKGROUND OF THE INVENTION

### 1. Field of the Invention

The present invention relates to diversity receivers.

### 2. Description of the Related Art

In general, FM (frequency modulation) receivers disposed in automobiles may not always be in a stable reception state due to multipath or fading generated as the automobiles move. To address this drawback, a diversity reception system capable of stably receiving FM broadcast waves has been used to improve the reception state of such mobile devices. The diversity reception system includes a phase diversity reception system and an antenna-switching diversity reception system.

In the phase diversity reception system, FM broadcast waves are received by means of two antennas, outputs from the antennas are supplied to two reception circuits, intermediate-frequency signals of the outputs are controlled and synthesized to have the same phases, and the synthesized intermediate-frequency signals are demodulated to obtain audio signals. Use of this method achieves significant improvements and high-quality broadcasting can be received.

On the other hand, the antenna-switching diversity reception system includes a single reception circuit. In the antenna-switching diversity reception system, FM broadcast waves are received by means of a plurality of antennas and, among outputs of the plurality of antennas, the most desirable output is selected and supplied to the reception circuit. Accordingly, although effects obtained by the antenna-switching diversity reception system are not as pronounced as those obtained by the phase diversity reception system, a reception state may be improved with a comparatively low cost.

The related arts are disclosed in Japanese Unexamined Patent Application Publication Nos. 5-75506 and 6-204926.

### SUMMARY OF THE INVENTION

In many European countries, most FM broadcasting stations use RDS (radio data system) for data broadcasting. Data broadcasted by means of RDS (hereinafter referred to "RDS data") is digital data associated with broadcasting stations and broadcasting programs. The RDS data includes:
AF list; an alternative frequency list,
PI code; a broadcasting station identification code (a program identification code),
PS data; character data showing the name of a broadcasting station (a program service name), and
PTY code; program type identification code showing contents of a program.
The RDS data is generated by subjecting an original audio signal to frequency multiplication and is broadcasted.

In general, a broadcasting station uses a plurality of frequencies for broadcasting programs of identical content using RDS data. The AF list described above represents frequencies which are used for broadcasting programs of identical content, and the PI code represents whether the broadcasting station using the frequencies in the AF list is the same broadcasting station as that a listener has been listening to.

For example, if a driver is listening to a program and the reception state of the program deteriorates while driving, alternative frequencies in the AF list are checked (hereinafter referred to an "AF check") and the reception frequency is changed in accordance with a result of the AF check, whereby the driver can continuously listen to the same program that the driver has been listening to.

However, when an AF check is performed by an FM receiver employing a phase diversity reception system, since one of the two reception circuits is used for the AF check, phase diversity reception does not function during the AF check resulting in deterioration of reception quality.

Furthermore, when an AF check is performed by an FM receiver employing an antenna-switching diversity reception system, since the whole reception circuit is used for the AF check, the listener cannot listen to a program during the AF check. Practically, when the reception frequencies are changed, noise is generated, and therefore muting processing is performed. However, this muting processing produces noise.

The present invention has been made to address the above-described drawback.

According to an embodiment of the present invention, there is provided a diversity receiver used for receiving broadcast transmission of audio signals and data which are multiplexed, the diversity receiver including first and second reception circuits using a superheterodyne principle. At a time of stationary reception, reception of the audio signals and the data, which employs a phase diversity reception system, is performed such that the signals received by the first reception antenna are supplied to the first reception circuit, the signals received by the second reception antenna are supplied to the second reception circuit, and phases of first and second intermediate-frequency signals output from the first and second reception circuits, respectively, are controlled and the first and second intermediate-frequency signals are added to each other. At a time of reception-frequency search performed using the data, reception of the audio signals, which employs an antenna-switching diversity reception system, is performed such that, the signals received by at least one of the first and second antennas are selectively supplied to the first reception circuit and reception of the data and the reception-frequency search are performed, and the signals received by the first and second antennas are selectively supplied to the second reception circuit.

According to the embodiment of the present invention, not only at the time of stationary reception but also at the time of a check performed to change a reception frequency, the program which the listener has been listened to is continuously listened to by the listener. In addition, noise produced due to multipath and fading is suppressed resulting in increased satisfaction of the listener.

### BRIEF DESCRIPTION OF THE DRAWINGS

Fig. 1 shows a system diagram illustrating a circuit according to an embodiment of the present invention;
Fig. 2 shows a diagram illustrating an equivalent circuit of the circuit shown in Fig. 1 in a first state; and
Fig. 3 shows a diagram illustrating an equivalent circuit of the circuit shown in Fig. 1 in a second state.

### DESCRIPTION OF THE PREFERRED EMBODIMENTS

### Configuration Example

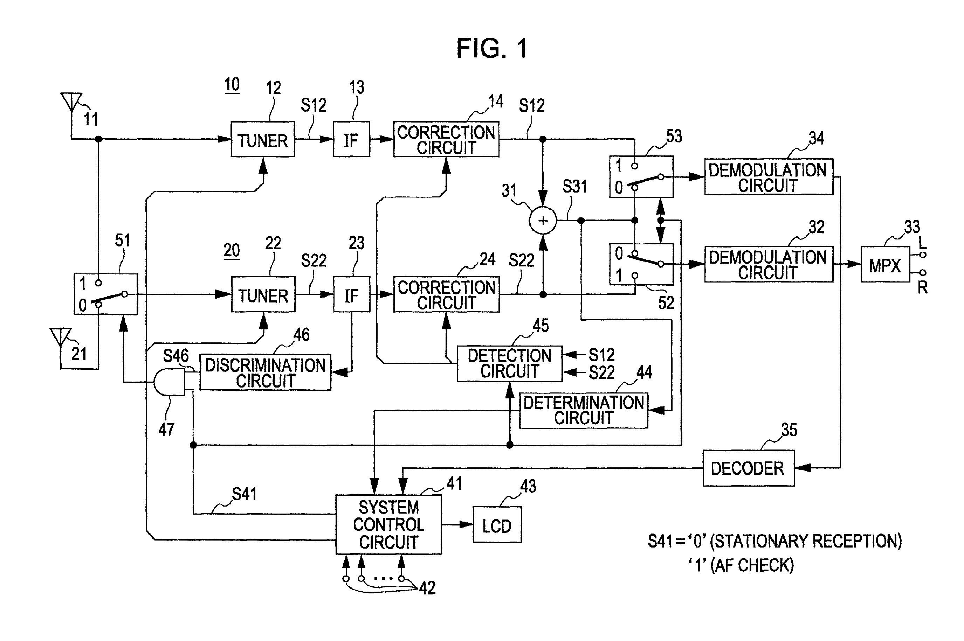

Fig. 1 shows an example of an FM receiver employing a diversity system having an AF check function, to which the present invention is applied.

In Fig. 1, a reference numeral 10 denotes a first reception circuit using a superheterodyne principle and a reference numeral 11 denotes a reception antenna thereof. The first reception circuit 10 includes a tuner circuit 12 and an intermediate frequency circuit 13.

Although not shown, the tuner circuit 12 employing a synthesizer method includes a high-frequency tuning circuit, a high-frequency amplifier, a mixer circuit, and a local oscillator circuit. The tuner circuit 12 performs frequency conversion processing on target reception signals having a frequency of fRX among reception signals supplied thereto to generate intermediate-frequency signals S12 (having an intermediate frequency of 10.7 MHz, for example).

The intermediate frequency circuit 13 includes an intermediate frequency amplifier (a limiter amplifier) and an intermediate frequency filter. The intermediate frequency circuit 13 selects the intermediate-frequency signals S12 from signals output from the tuner circuit 12, and amplifies and outputs the intermediate-frequency signals S12. The intermediate-frequency signals S12 output from the intermediate frequency circuit 13 are subjected to phase correction processing by a variable phase correction circuit 14 and are supplied to an adder 31.

A reference numeral 20 denotes a second reception circuit using a superheterodyne principle and a reference numeral 21 denotes a reception antenna thereof. The reception circuit 20 has a tuner circuit 22 and an intermediate frequency circuit 23 which are configured similarly to the tuner circuit 12 and the intermediate frequency circuit 13, respectively. The intermediate frequency circuit 23 outputs intermediate-frequency signals S22 and the intermediate-frequency signals S22 are subjected to phase correction processing by a variable phase correction circuit 24 and are supplied to an adder 31. Accordingly, intermediate-frequency signals S31 which are generated by adding the intermediate-frequency signals S12 and the intermediate-frequency signals S22 are obtained from the adder 31.

Furthermore, the FM receiver includes FM demodulation circuits 32 and 34, and a stereo demodulation circuit 33, and an RDS decoder circuit 35. The FM demodulation circuit 32 is used to demodulate intermediate-frequency signals to obtain stereo-composite signals and the stereo demodulation circuit 33 is used to demodulate the stereo-composite signals to obtain stereo-audio signals for left and right channels.

The FM demodulation circuit 34 is used to demodulate and output signals which were obtained by modulating intermediate-frequency signals using RDS data. The RDS decoder circuit 35 decodes the signals coded using the RDS data to obtain the decoded RDS data, performs error correction processing on the decoded RDS data, and outputs the decoded RDS data.

A reference numeral 41 denotes a system control circuit including a microcomputer. The system control circuit 41 is used to implement processing such as channel selection, reception of RDS data, or an AF check in the FM receiver. The system control circuit 41 outputs mode signals S41 having a value "0" at a time of stationary reception whereas the system control circuit 41 outputs mode signals S41 having a value "1" at a time of an AF check. The system control circuit 41 supplies channel-selection signals to the tuner circuits 12 and 22. Various operation switches 42 to be operated by a listener are connected to the system control circuit 41 and further a display such as an LCD (liquid crystal display) 43 is connected to the system control circuit 41.

The FM receiver includes a determination circuit 44 to determine reception qualities of FM broadcast waves. The determination circuit 44 determines the reception qualities of the intermediate-frequency signals S31 in terms of multipath and noise levels, for example. In this determination, multipath levels are detected in accordance with ripple components of the intermediate-frequency signals S31 and noise levels are detected in accordance with the levels of a high-frequency components when the intermediate-frequency signals S31 are output after FM demodulation. Determination signals output from the determination circuit 44 are supplied to the system control circuit 41.

The FM receiver further includes a detection circuit 45 and a discrimination circuit 46. The detection circuit 45 receives the intermediate-frequency signals S12 and S22 supplied from the variable phase correction circuits 14 and 24, respectively. In the detection circuit 45, an algorithm called a "constant modulus algorithm" is executed, for example. Signals generated as results of execution of the algorithm are supplied to the variable phase correction circuits 14 and 24 as control signals used for phase correction processing to be performed on the intermediate-frequency signals S12 and S22. The intermediate-frequency signals S12 and S22 are subjected to phase correction processing so that the levels of the intermediate-frequency signals S31 becomes a maximum level, that is, so that the intermediate-frequency signals S12 and S22 have the same phases.

As with the determination circuit 44, the discrimination circuit 46 determines reception qualities of the FM broadcast waves in accordance with the intermediate-frequency signals S22 in the intermediate frequency circuit 23. In addition, the discrimination circuit 46 discriminates a result of the determination as will be described later and outputs discrimination signals S46. The discrimination signals S46 are supplied to an AND circuit 47.

Switch circuits 51 to 53 are controlled to switch at a time of stationary reception and at a time of an AF check. The switch circuits 52 and 53 receive the mode signals S41 as switch-control signals. Furthermore, the mode signals S41 are supplied to the AND circuit 47 and outputs from the AND circuit 47 are supplied to the switch circuit 51 as a switch-control signal. Each of the switch circuits 51 to 53 is connected as shown in Fig. 1 when the switch-control signal has a value "0", whereas each of the switch circuits 51 to 53 is switched so as to have a state opposite to those in Fig. 1 when the switch-control signal has a value "1".

Note that a signal system ranging from the intermediate frequency circuits 13 and 23 to the stereo demodulation circuit 33 and the RDS decoder circuit 35, the determination circuit 44, the detection circuit 45, the discrimination circuit 46, and the AND circuit 47 may be configured using DSPs (digital signal processors) and programs thereof.

### Operation at Time of Stationary Reception

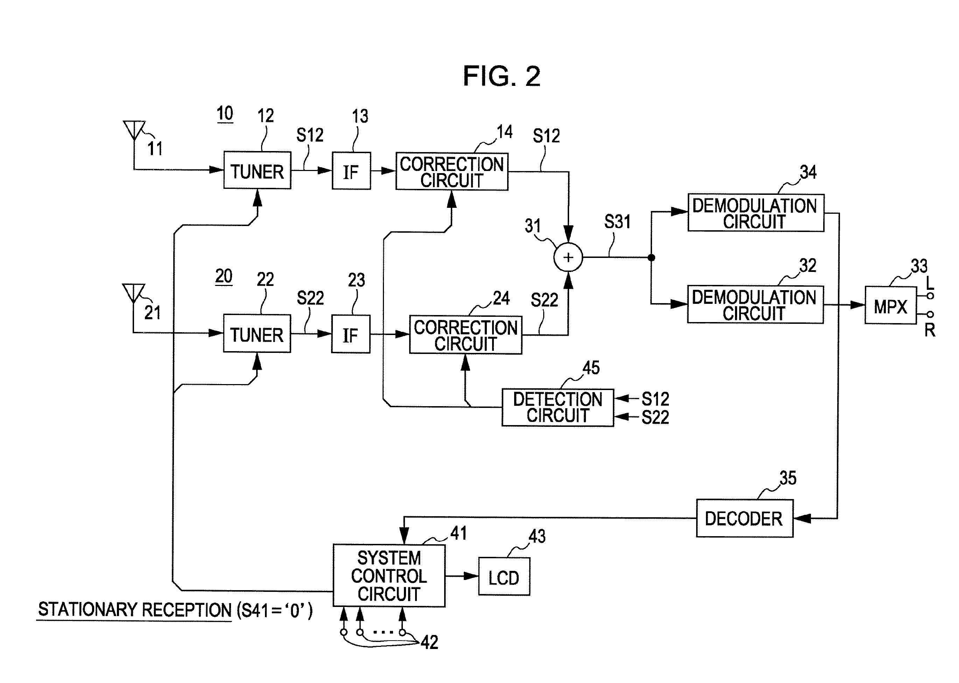

At a time of stationary reception, in accordance with the channel-selection signal supplied from the system control circuit 41, a reception frequency f12 of the tuner circuit 12 is set to the frequency fRX of the target broadcast, and a reception frequency f22 of the tuner circuit 22 is set to a frequency fRX of the target broadcast. In this case, the value of the mode signal S41 is "0", and therefore the output of the AND circuit 47 is also "0". Accordingly, the switch circuits 51 to 53 are connected as shown in Fig. 1. The circuit shown in Fig. 1 is equivalently illustrated as a circuit shown in Fig. 2.

Specifically, in the reception circuit 10, the antenna 11 receives FM broadcast waves and supplies the received waves as reception signals to the tuner circuit 12. Among the reception signals, target reception signals having the frequency fRX are subjected to frequency conversion processing to obtain the intermediate-frequency signals S12, and the intermediate-frequency signals S12 are supplied through the intermediate frequency circuit 13 and the variable phase correction circuit 14 to the adder 31.

Similarly, in the reception circuit 20, the antenna 21 receives FM broadcast waves and supplies the received broadcast waves as reception signals to the tuner circuit 22. Among the reception signals, target reception signals having the frequency fRX are subjected to frequency conversion processing to obtain the intermediate-frequency signals S22 which have the same intermediate frequency as the intermediate-frequency signals S12, and the intermediate-frequency signals S22 are supplied through the intermediate frequency circuit 23 and the variable phase correction circuit 24 to the adder 31.

Then, in the adder 31, the intermediate-frequency signals S12 and the intermediate-frequency signals S22 are added to obtain the intermediate-frequency signals S31. The intermediate-frequency signals S31 are supplied to the FM demodulation circuit 32 to be demodulated to obtain stereo-composite signals and further the stereo-composite signals are supplied to the stereo demodulation circuit 33 to obtain stereo-audio signals L and stereo-audio signals R for a left channel and a right channel, respectively.

Meanwhile the intermediate-frequency signals S31 output from the adder 31 are supplied to the FM demodulation circuit 34 and the intermediate-frequency signals S31, which have been modulated using RDS data, are demodulated. Then, the demodulated signals are supplied to the RDS decoder circuit 35 to be decoded to obtain RDS data and error correction processing is performed on the RDS data. The RDS data is supplied to the system control circuit 41.

The intermediate-frequency signals S12 and S22 output from the variable phase correction circuits 14 and 24, respectively, are supplied to the detection circuit 45 and the differences between the phases of the intermediate-frequency signals S12 and S22 are detected to generate detection signals. The detection signals are supplied to the variable phase correction circuits 14 and 24 as control signals used to perform phase correction processing on the intermediate-frequency signals S12 and S22, respectively. The phases of the intermediate-frequency signals S12 and S22 are corrected so as to be the same phases.

Accordingly, at the time of stationary reception, broadcast reception employing a phase diversity reception system is performed. As a result, at the time of stationary reception, even when a broadcast, which has been received, is influenced by multipath or fading, the broadcast is received in a highly stable manner by the phase diversity reception system resulting in high-quality reception.

### At Time of AF Check

When a reception state is deteriorated at the time of stationary reception, the reception quality of the FM broadcast waves is deteriorated. If the level of the reception quality is lower than a reference level, an AF check is executed as will be described below.

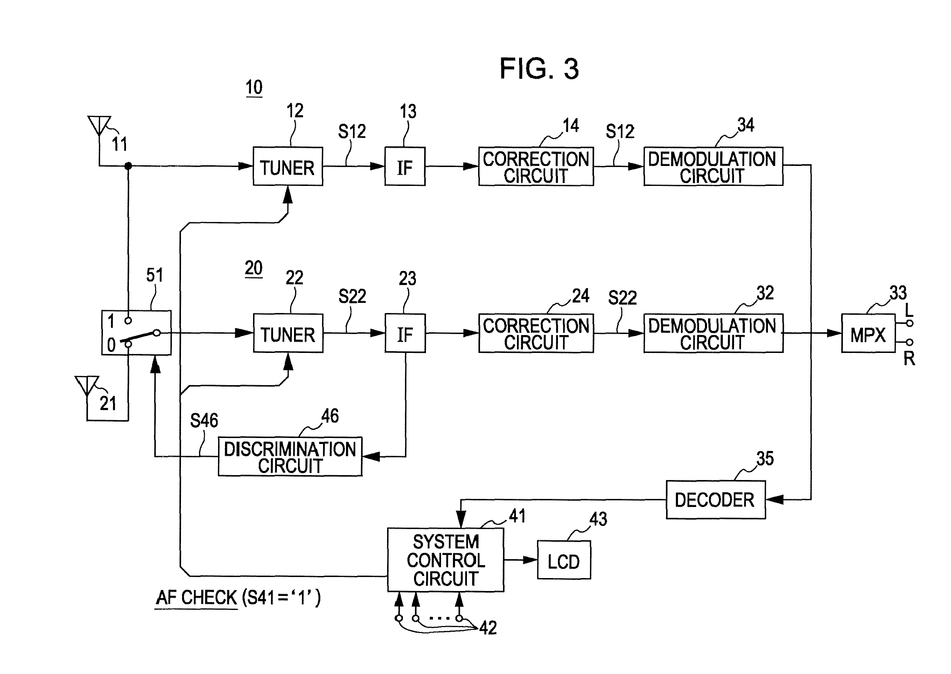

Specifically, in Fig. 1, when the determination circuit 44 determines that the levels of the reception qualities of the FM broadcast waves are lower than the reference level, the determination circuit 44 supplies a result of the determination to the system control circuit 41. As a result, the mode signals S41 are set to a value "1" and therefore the switch circuits 52 and 53 are switched so as to have a state opposite to those in Fig. 1. Since the mode signals S41 are set to a value "1", the discrimination signal S46 output from the discrimination circuit 46 is supplied through the AND circuit 47 to the switch circuit 51 as a switch-control signal. Furthermore, since the mode signals S41 are set to a value "1", the detection circuit 45 does not operate and the amount of phase correction of each of the variable phase correction circuits 14 and 24 is fixed. Accordingly, in this case, the circuit shown in Fig. 1 is equivalently illustrated as a circuit as shown in Fig. 3.

Specifically, in the reception circuit 10, the antenna 11 receives FM broadcast waves and supplies the received broadcast waves as reception signals to the tuner circuit 12. Among the reception signals, reception signals having the frequency fRX are subjected to frequency conversion processing to obtain the intermediate-frequency signals S12, and the intermediate-frequency signals S12 are supplied through the intermediate frequency circuit 13 and the variable phase correction circuit 14 to the FM demodulation circuit 34.

Then the FM demodulation circuit 34 demodulates signals, which had been modulated using RDS data, and outputs the demodulated signals. The demodulated signals are supplied to the RDS decoder circuit 35 to be decoded to obtain RDS data, and error correction processing is performed on the RDS data before the RDS data is supplied to the system control circuit 41. Hereafter, the system control circuit 41 starts performing an AF check.

When the system control circuit 41 supplies a selection-channel signal to the tuner circuit 12, the reception frequency fRX of the tuner circuit 12 is changed in accordance with the AF list, whereby a broadcasting station using the alternate frequencies is searched for. That is, the AF check is started.

On the other hand, in the reception circuit 20, the antenna 11 or the antenna 21 receives FM broadcast waves and supplies the received waves as reception signals to the tuner circuit 22. Among the reception signals, reception signals, which have the frequency fRX and which the listener has been listening to, are subjected to frequency conversion processing to obtain the intermediate-frequency signals S12, and the intermediate-frequency signals S12 are supplied through the intermediate frequency circuit 23 and the variable phase correction circuit 24 to the FM demodulation circuit 32.

As a result, the FM demodulation circuit 32 continuously outputs the stereo-composite signals, which the listener has been listening to, and the output stereo-composite signals are supplied to the stereo demodulation circuit 33 to obtain stereo-audio signals L and stereo-audio signals R for a left channel and a right channel, respectively.

Then, the discrimination circuit 46 compares and discriminates reception qualities of the signals received by the antenna 11 and reception qualities of the signals received by the antenna 21. The switch 51 is controlled to select the signals which provide better reception qualities.

Accordingly, when the AF check is started, in the reception circuit 20, broadcast reception employing an antenna-switching diversity reception system is performed. As a result, even when the AF check is started, a program, which the listener has been listening to, is continuously received in a stable manner by using the reception circuit 20.

As a result of the AF check, when it is determined that a PI code is set to an alternate frequency fAF, the program having an identical content as that the listener has been listening to is received. Accordingly, the reception circuit 10 stops performing the AF check after the determination, and thereafter the broadcast wave of the program is received using the alternative frequency fAF.

Then, the system control circuit 41 outputs the selection-channel signals to the tuner circuit 12 to change the reception frequency of the tuner circuit 12 to the alternative frequency fAF and the mode signals S41 are set to a value "0". Accordingly, at this point, the circuit shown in Fig. 1 is equivalently illustrated as the circuit shown in Fig. 2 and the alternative frequency fAF is received using an antenna-switching diversity reception system as described above.

### Conclusion

According to the receiver described above, at the time of stationary reception, a broadcast is received by means of a phase diversity reception system using the reception circuits 10 and 20 as shown in Fig. 2. On the other hand, at the time of an AF check, a broadcast is received by means of an antenna-switching diversity reception system using at least one of the reception circuits 10 and 20 and the AF check is performed, as shown in Fig. 3.

Consequently, not only at the time of stationary reception but also at the time of an AF check, the program which the listener has been listened to is continuously listened to by the listener. In addition, noise produced due to multipath and fading is suppressed resulting in increased satisfaction of the listener.

### Others

In the foregoing description, operations of signal processing other than processing operations performed by the tuner circuits 12 and 22 and the system control circuit 41 may be implemented by DSPs and programs thereof. In addition, at the time of an AF check (in a state as shown in Fig. 3), reception signals output from the switch circuit 51 may be supplied to the tuner circuit 12. Furthermore, the intermediate-frequency signals S12 and S22 may be supplied to the switch circuits 53 and 52 without passing through the variable phase correction circuits 14 and 24, respectively. In this case, at the time of the AF check, the detection circuit 45 does not necessarily stop operating.

Furthermore, when broadcast waves are received by means of an antenna-switching diversity reception system, signals having the most desirable reception quality may be selected from among signals received by the antenna 11, reception signals of antenna 21, addition signals obtained from the reception signals of the antenna 11 and the signals received by the antenna 21, and difference signals obtained by adding the reception signals of the antenna 21 to the reception signals of the antenna 11 in an opposite phase. Furthermore, the AF check may start performing when an error of the RDS data in the RDS decoder circuit 35 exceeds a prescribed value.

Although the forgoing description is made for an FM broadcast using a multiplex broadcast transmitting data which employs an RDS method which is broadly used in European countries, the present invention may be applicable to broadcasting employing a DARC (data radio channel (trademark)) method which is generally used in Japan. Furthermore, the present invention is applicable in a case where, while a frequency used for digital terrestrial broadcasting is received, data having another reception frequency is checked.

It should be understood by those skilled in the art that various modifications, combinations, sub-combinations and alterations may occur depending on design requirements and other factors insofar as they are within the scope of the appended claims or the equivalents thereof.

## Claims

1. A diversity receiver used for receiving broadcast transmission of audio signals and data which are multiplexed, the diversity receiver comprising:
first and second reception circuits using a superheterodyne principle,
wherein, at a time of stationary reception, reception of the audio signals and the data, which employs a phase diversity reception system, is performed such that,
the signals received by a first reception antenna are supplied to the first reception circuit,
the signals received by a second reception antenna are supplied to the second reception circuit, and
phases of first and second intermediate-frequency signals output from the first and second reception circuits, respectively, are controlled and the first and second intermediate-frequency signals are added to each other, and
wherein, at a time of reception-frequency search performed using the data, reception of the audio signals, which employs an antenna-switching diversity reception system, is performed such that,
the signals received by at least one of the first and second antennas are selectively supplied to the first reception circuit and reception of the data and the reception-frequency search are performed, and
the signals received by the first and second antennas are selectively supplied to the second reception circuit.

2. A diversity receiver used for receiving broadcast transmission of audio signals and data which are multiplexed, the diversity receiver comprising:
first and second reception circuits using a superheterodyne principle;
first and second variable phase correction circuits configured to correct phases of first and second intermediate-frequency signals output from the first and second reception circuits, respectively;
an adder configured to add the first and second intermediate-frequency signals output from the first and second variable phase correction circuits;
first and second frequency-demodulation circuits configured to demodulate the first and second intermediate-frequency signals output from the first and second reception circuits, respectively; and
a decoder configured to decode signals output from the first frequency-demodulation circuit,
wherein, at a time of stationary reception, reception of the audio signals and the data, which employs a phase diversity reception system, is performed such that,
the signals received by the first reception antenna are supplied to the first reception circuit,
the signals received by the second reception antenna are supplied to the second reception circuit, and
the first and second variable phase correction circuits are controlled so that the first and second intermediate-frequency signals, which are output from the first and second variable phase correction circuits, respectively, in accordance with signals output from the adder, have the same phases, and
meanwhile, the signals output from the adder are supplied to the second frequency-demodulation circuit and the audio signals are demodulated,
the signals output from the adder are supplied to the first frequency-demodulation circuit, and
signals demodulated in the first frequency-demodulation circuit are supplied to the decoder to decode the signals to obtain the data,
wherein, at a time of reception-frequency search performed using the data, reception of the audio signals, which employs an antenna-switching diversity reception system, is performed such that,
the signals received by at least one of the first and second antennas are selectively supplied to the first reception circuit and reception of the data and the reception-frequency search are performed,
the first intermediate-frequency signals output from the first reception circuit are supplied to the first frequency-demodulation circuit,
signals output from the first frequency-demodulation circuit are supplied to the decoder circuit and are used to decode the data used for the reception-frequency search,
the second intermediate-frequency signals output from the second reception circuit are supplied to the second frequency-demodulation circuit and used to demodulate the audio signals, and
in accordance with the second intermediate-frequency signals output from the second reception circuit, the signals received by the first and second antennas are selectively supplied to the second reception circuit and are used for the reception of the audio signals.

3. The diversity receiver according to Claim 2, further comprising:
a determination circuit configured to determine a reception quality of the broadcast transmission,
wherein when the determination circuit determines that a reception state of the broadcast transmission is deteriorated at a time of normal reception, the reception-frequency search is performed.

4. The diversity receiver according to Claim 2, further comprising:
a discrimination circuit configured to compare qualities of the signals received by the first reception antenna and reception qualities of the signals received by the second reception antenna and discriminate the signals which provide better reception qualities and configured to selectively change an antenna to be used to supply reception signals to the second reception circuit in accordance with a result of the discrimination performed by the discrimination circuit.

5. The diversity receiver according to Claim 1,
wherein the reception signals are signals used to transmit frequency modulation broadcasting.

6. The diversity receiver according to Claim 1, wherein the reception signals are signals used to transmit digital broadcasting.
